# EUROPÄISCHE PATENTSCHRIFT

(11) **EP 0 945 409 B1**
(45) Veröffentlichungstag und Bekanntmachung des Hinweises auf die Patenterteilung: **03.09.2003**
(21) Anmeldenummer: 99105283.8
(22) Anmeldetag: 15.03.1999
(51) Int. Cl.: C02F 11/12

(54) **Anlage zum Trocknen von Schlämmen**
Plant for drying sludge
Installation pour le séchage de boues

(30) Priorität: 25.03.1998 DE 19813100
(43) Veröffentlichungstag der Anmeldung: 29.09.1999
(73) Patentinhaber: Silber, Wolfgang, 22045 Hamburg (DE)
(72) Erfinder: Hepke, Hans-Jörg, 31275 Lehrte (DE); Silber, Wolfgang, 22045 Hamburg (DE)
(74) Vertreter: Biehl, Christian, Dipl.-Phys.

(56) Entgegenhaltungen:
- DE-A- 4 117 630
- FR-A- 2 758 100
- US-A- 5 069 801
- US-A- 5 660 124

## Beschreibung

Die Erfindung betrifft eine Anlage zum Trocknen *von* Schlämmen, insbesondere Klärschlämmen, mit den Merkmalen des Oberbegriffs des Anspruchs 1.

Schlämme fallen in unterschiedlicher Weise, beispielsweise in kommunalen Kläranlagen, an. Die Entsorgung derartiger Schlämme ist ein erhebliches Problem.

Es ist bekannt, Klärschlämme durch Trocknung aufzubereiten, wodurch deren Masse erheblich gemindert werden kann. Das durch die Trocknung gewonnene Produkt kann dann beispielsweise auf Feldern als Düngemittel ausgebracht werden.

Bedenken gegen eine solche Verwendung getrockneter Klärschlämme besteht jedoch dann, wenn diese mit infektiösen Keimen belastet sind. Es ist daher sicherzustellen, daß während der Trocknung eine zuverlässige Sterilisation erfolgt.

Aus der US-A-5 069 801 ist eine Anlage mit den Merkmalen des Obergegriffs des Anspruchs 1 bekannt, bei der der Trockner durch Scheiben gebildet wird. Eine kontrollierte Führung der Brühden ist nicht möglich.

Der Erfindung liegt die Aufgabe zugrunde, eine Anlage zum Trocknen von Schlämmen zu schaffen, bei der eine zuverlässige sterilisation der zu verwertenden Schlämmen erfolgt.

Erfindungsgemäß wird diese Aufgabe gelöst durch die Merkmale des Anspruchs 1.

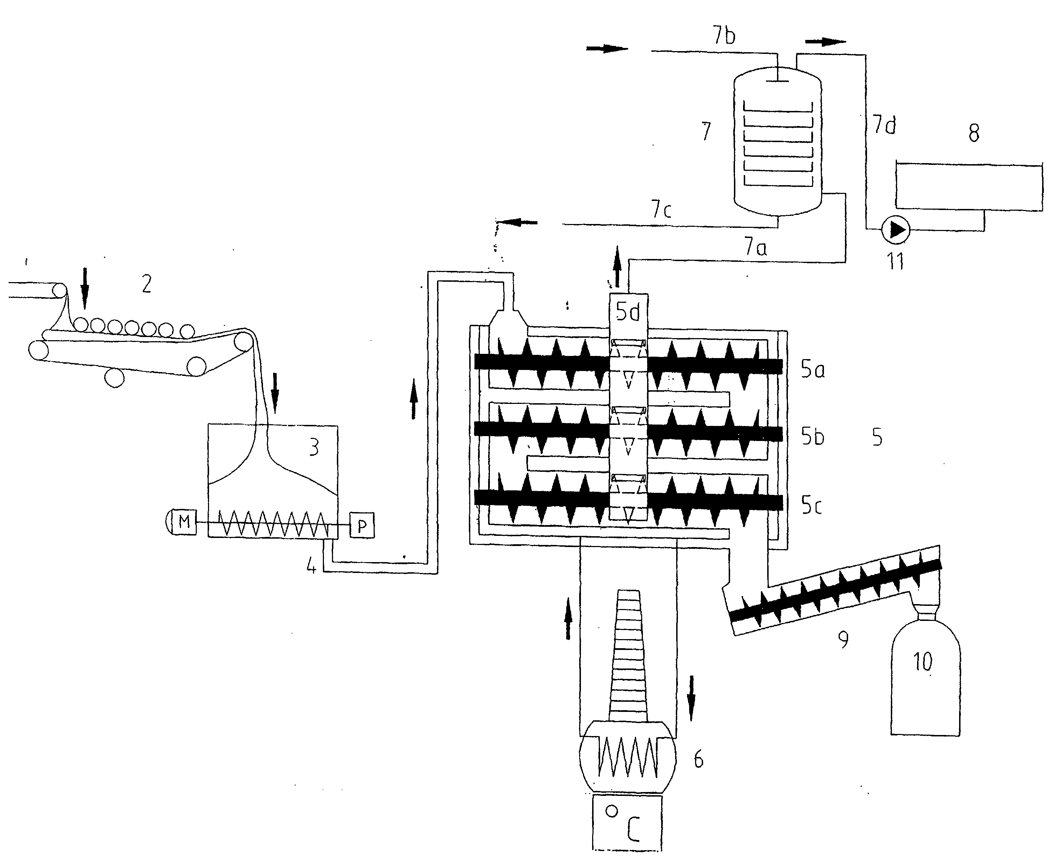

Die Erfindung wird im folgenden anhand einer Zeichnung erläutert. Dabei zeigt die einzige Figur eine schematische Darstellung einer derartigen Anlage.

Die zum Trocknen von Schlämmen, insbesondere Klärschlämmen dienende Anlage (ein "Schlamm" im Sinne dieser Anmeldung können förderfähige Abfälle jeglicher Art mit einem relativ hohen Feuchtigkeitsgehalt sein) besteht aus einem Dünnschlammzulauf 1, einer mechanischen Vorentwässerungseinrichtung 2, einem Vorlagebehälter 3, einer Förderpumpe 4, einem Trockner 5, einer Heizanlage 6, einem Brüdenwäscher 7, einem Abluftfilter 8, einer Austragfördereinrichtung 9 und einem Ventilator 11.

Der Kaskadentrockner ist mit einer Mehrzahl - in dem dargestellten Ausführungsbeispiels 3 - übereinander angeordneten Schneckenförderer 5a, 5b, 5c versehen. Die Heizanlage 6 beheizt den Mantel des Trockners 3 sowie die einzelnen Schneckenförder 5a, 5b, 5c. Die bei Aufbringung von Hitze austretenden Brüden treten über einen Schacht 5d, der über in den Trockner 5 eingebrachte Durchbrechungen mit den von den Schneckenförderern 5a, 5b, 5c überstrichenen Bereichen kommuniziert, in die Brüdenleitung 7a und in den Brüdenwäscher 7 ein. In den Brüdenwäscher 7 über einen Brauchwasserzulauf 7b eingebrachtes Brauchwasser kondensiert und wäscht die Brüden, das Waschwasser tritt sodann aus dem Wasserrücklauf 7c wieder aus. Die Abluft wird über eine Abluftleitung 7d in ein Abluftfilter 8 geführt.

Der von der Förderpumpe 4 aus dem Vorlagebehälter 3 in den Bereich der obersten der Schneckenförderer 5a eingebrachte Schlamm läuft durch den Trockner 5 hindurch, er tritt als trockenes, krümmeliges Produkt aus dem Endbereich des untersten der Schneckenförder 5c auf die Fördereinrichtung 5 aus und wird bei dem dargestellten Ausführungsbeispiel sodann in einem Trockengutstapelbehälter 10 zwischengelagert, bis er abgefahren wird.

Das Verdampfen des Wassers in dem Trockner 5 bewirkt das Entstehen eines Überdrucks in diesem und zu einem Austritt von Falschluft durch Buchsen und dergleichen. Die Strömung der Luft und des Wasserdampfes in dem Trockner 5 ist daher nicht kontrolliert. Dies kann zur Folge haben, daß Keime relativ schnell durch den Trockner 5 hindurcheilen und nicht ausreichend sterilisiert werden.

Um ein solches unverwünschtes Durcheilen von Keimen zu vermeiden, ist in der Abluftleitung 7d ein Ventilator 11 vorgesehen, der die Brüden durch den Brüdenwäscher 7 hindurchzieht, so daß in dem Trockner 5 ein Druck herrscht, der geringer als der Umgebungsdruck ist. Dieser stellt sicher, daß Keime nicht schneller als das getrocknete Gut durch den Trockner 5 hindurcheilen können, so daß eine vollständige Sterilisation des zu trocknenden Guts sichergestellt ist.

## Patentansprüche

1. Anlage zum Trocknen von Schlämmen, mit einem Dünnschlammzulauf (1), einer mechanischen Vorentwässerungseinrichtung (2), einem Vorlagebehälter (3), einer Förderpumpe (4), einem kaskadenartigen Trockner (5), bei dem der Schlamm oben eingeführt und unten abgeführt wird, einer Heizanlage (6), einem Brüdenwäscher (7), der mit dem Trockner (5) über Leitungen (7a) verbunden ist, einer Austragsfördereinrichtung (9) und mit einer Einrichtung zum Erzeugen eines Unterdrucks in dem Trockner (5),
**dadurch gekennzeichnet, daß** der Trockner (5) mit einer Mehrzahl von übereinander angeordneten Schneckenförderern (5a, 5b, 5c) und mit einem mit der Brüdenleitung (7a) verbundenen Schacht (5d) versehen ist, der über in den Trockner (5) eingebrachte Durchbrechungen mit den von den Schneckenförderern (5a, 5b, 5c) überstrichenen Bereichen kommuniziert.

2. Anlage nach Anspruch 1, daß der Brüdenwäscher (7) mit einer von dem Kaskadentrockner (5) kommenden Brüdenleitung (7a), einem Brauchwasserzulauf (7b), einem Wasserrücklauf (7c) und einer zu einem Abluftfilter (8) führenden Abluftleitung (7d) versehen ist.

3. Anlage nach Anspruch 1 oder 2, **gekennzeichnet durch** eine Einrichtung zum Erzeugen eines Unterdrucks in dem Trockner (5).

## Claims

1. Plant for drying sludge, with a thin sludge feed (1), a mechanical pre-draining device (2), a receiving container (3), a feed pump (4), a cascade-type dryer (5), into which the sludge is introduced at the top and removed at the bottom, a heating installation (6), a vapour washer (7), which is connected to the dryer (5) by lines (7a), a discharge conveyor (9) and a device for producing a vacuum in the dryer (5), **characterized in that** the dryer (5) is provided with a plurality of superimposed screw conveyors (5a, 5b, 5c) and a shaft (5d) connected to the vapour line (7a) and which communicates by means of openings formed in the dryer (5) with areas passed over by the screw conveyors (5a, 5b, 5c).

2. Plant according to claim 1, **characterized in that** the vapour washer (7) is provided with a vapour line (7a) coming from the cascade dryer (5), a process water feed (7b), a water return (7c) and a spent air line (7d) leading to the spent air filter (8).

3. Plant according to claim 1 or 2, **characterized by** a device for producing a vacuum in the dryer (5).

## Revendications

1. L'installation de séchage de boues, présentant une amenée de (1) de boues diluées, un dispositif de pré-essorage mécanique (2), un réservoir tampon (3), une pompe de transport (4), un séchoir (5) du type en cascade dans lequel les boues sont apportées par le haut et évacuées par le bas, une installation de chauffage (6), un laveur de vapeurs (7) relié au séchoir (5) par des conduits (7a), un dispositif de transport d'extraction (9) et un dispositif pour créer une dépression dans le séchoir (5),
**caractérisée en ce que** le séchoir (5) est doté d'une pluralité de transporteurs à vis (5a, 5b, 5c) disposés les uns au-dessus des autres et d'un puits (5d) relié au conduit à vapeurs (7a) et communiquant avec les régions concernées des transporteurs à vis (5a, 5b, 5c) par des perforations ménagées dans le séchoir (5).

2. Installation selon la revendication 1, **caractérisée en ce que** le laveur de vapeurs (7) est doté d'un conduit (7a) pour les vapeurs provenant du séchoir en cascade (5), d'une amenée d'eau usée (7b), d'un retour d'eau (7c) et d'un conduit d'évacuation d'air (7d) conduisant à un filtre (8) pour l'air évacué.

3. Installation selon les revendications 1 ou 2, **caractérisée par** un dispositif pour la création d'une dépression dans le séchoir (5).
